# EUROPÄISCHE PATENTANMELDUNG

(11) **EP 2 211 002 A1**
(43) Veröffentlichungstag der Anmeldung: **28.07.2010**
(21) Anmeldenummer: 09405014.3
(22) Anmeldetag: 26.01.2009
(51) Int. Cl.: E04G 23/00, E04G 3/30, E04G 3/24, B64B 1/00

(54) **Reinigungsanlage für eine Fassade eines Gebäudes**

(71) Anmelder: Niederberger Engineering AG, 6370 Oberdorf (CH)
(72) Erfinder: Niederberger, Anton, 6370 Oberdorf (CH)
(74) Vertreter: Nückel, Thomas

(57) **Zusammenfassung**

Die Reinigungsanlage für eine Fassade eines Gebäudes umfasst eine ringförmige Tragstruktur (5), welche derart ausgebildet ist, dass sie das Gebäude (1) umschliessen kann. Zudem umfasst die Reinigungsanlage eine Transporteinrichtung (8), welche an der Tragstruktur (5) befestigt und vorgesehen ist, um die Tragstruktur (5) zu bewegen. Darüber hinaus ist eine Reinigungseinrichtung (6) vorhanden, welche mit der Tragstruktur (5) verbunden und vorgesehen ist, um die Fassade (1.1) des Gebäudes (1) zu reinigen.

## Beschreibung

### Technisches Gebiet

Die Erfindung betrifft eine Reinigungsanlage für eine Fassade eines Gebäudes sowie ein Gebäude mit der erfindungsgemässen Reinigungsanlage.

### Stand der Technik

Aus der Druckschrift US 5,465,446 ist eine Reinigungsmaschine für ein Hochhaus bekannt. Die Reinigungsmaschine umfasst eine Aufzugskabine, die mit zwei Reinigungswalzen ausgestattet ist. Mit Hilfe der beiden sich drehenden Reinigungswalzen lässt sich die Fassade des Hochhauses reinigen. Die Aufzugskabine selbst hängt an zwei Stahlseilen, die mit einem auf dem Dach des Hochhauses angeordneten Träger verbunden sind. Um die Fassade des Hochhauses zu reinigen, wird die Aufzugskabine am Hochhaus nach oben und nach unten bewegt und dabei die Fassade bahnweise gereinigt. Anschliessend wird der Träger auf dem Dach des Hochhauses weiter bewegt und die Aufzugskabine erneut am Hochhaus nach oben und nach unten bewegt, so dass eine weitere Bahn an der Fassade gereinigt werden kann. Diese Lösung ist jedoch nur für Hochhäuser einsetzbar, die in der Vertikalen nicht gekrümmt sind. Insbesondere überhängende Bereiche können mit dieser Reinigungsmaschine nicht gereinigt werden. Je weiter sich nämlich die frei herabhängende Aufzugskabine im Bereich des Überhangs nach unten bewegt, desto weiter entfernt sie sich von der zu reinigenden Fläche.

Aus der Druckschrift CH 670 248 A5 ist eine Anordnung mit einer vertikal verfahrbaren Kabine zum Arbeiten an Konstruktionen mit einer in der Vertikalen gekrümmten Oberfläche bekannt. Die Anordnung dient insbesondere zum Arbeiten an großen Flächen, wie Kühltürmen, Staumauern, Schiffswänden und dergleichen. Die Anordnung umfasst dazu eine Kabine, die mit einem Raupenantrieb mit Saugnäpfen ausgestattet ist. Mit Hilfe des Raupenantriebs kann die Kabine an der Fassade des Gebäudes entlang bewegt werden. Die Saugnäpfe haften an der Fassade des Gebäudes und ermöglichen es, dass der Abstand zwischen der Kabine und der Fassade gleich bleibt. Auf der Oberseite des Bauwerks, beispielsweise des Kühlturms, befindet sich ein Drehkranz mit einem Träger, mit dem die Kabine über ein Seil verbunden ist.

Die beiden oben beschriebenen Lösungen haben jedoch den Nachteil, dass sie für die Montage des Trägers und des Drehkranzes eine ebene Fläche auf dem Dach oder der Oberseite des Gebäudes benötigen. Ist eine solche Fläche nicht vorhanden, sind die beiden Lösungen nicht einsetzbar.

### Darstellung der Erfindung

Eine Aufgabe der Erfindung ist es, eine Reinigungsanlage für eine Fassade eines Gebäudes anzugeben, mit der auch Fassaden mit Überhang gereinigt werden können und die ohne einen Träger oder einen Drehkranz im Dachbereich des Gebäudes auskommt.

Die Aufgabe wird durch eine Reinigungsanlage für eine Fassade eines Gebäudes mit den Merkmalen gemäss Patentanspruch 1 und durch eine Reinigungsanlage für eine Fassade eines Gebäudes mit den Merkmalen gemäss Patentanspruch 7 gelöst.

Die erfindungsgemässe Reinigungsanlage für eine Fassade eines Gebäudes umfasst eine ringförmige Tragstruktur, welche derart ausgebildet ist, dass sie das Gebäude umschliessen kann. Zudem umfasst die Reinigungsanlage eine Transporteinrichtung, welche an der Tragstruktur befestigt und vorgesehen ist, um die Tragstruktur zu bewegen. Darüber hinaus ist eine Reinigungseinrichtung vorhanden, welche mit der Tragstruktur verbunden und vorgesehen ist, um die Fassade des Gebäudes zu reinigen.

In einer dazu alternativen Ausführungsform umfasst die erfindungsgemässe Reinigungsanlage für eine Fassade eines Gebäudes ein Luftschiff und eine Reinigungseinrichtung, welche vorgesehen ist, um die Fassade des Gebäudes zu reinigen. Zudem ist eine Versorgungseinrichtung vorhanden, welche mit dem Luftschiff und der Reinigungseinrichtung verbunden und vorgesehen ist, um die Reinigungseinrichtung mit Energie und Reinigungsmittel zu versogen.

Vorteilhafte Weiterbildungen der Erfindung ergeben sich aus den in den abhängigen Patentansprüchen angegebenen Merkmalen.

Bei einer Ausführungsform der erfindungsgemässen Reinigungsanlage ist eine Versorgungseinrichtung vorhanden, welche mit der Tragstruktur verbunden und vorgesehen ist, um die Reinigungseinrichtung und die Transporteinrichtung mit Energie und Reinigungsmittel zu versorgen. Damit seht eine zentrale Versorgungsstation zur Verfügung. Dies hat den Vorteil, dass nicht jede Reinigungseinrichtung und jede Transporteinrichtung eine eigene Energiequelle benötigt. Dadurch lässt sich das Gesamtgewicht der Reinigungsanlage reduzieren.

Bei einer weiteren Ausführungsform der erfindungsgemässen Reinigungsanlage ist die Tragstruktur aus Leichtbaumaterial hergestellt. Dadurch wird die Tragstruktur leichter, so dass die Transporteinrichtung, die neben dem Transport der Reinigungsanlage auch einen sicheren Halt der gesamten Reinigungsanlage an der Fassade gewährleistet, kleiner dimensioniert werden kann.

Zudem kann bei der erfindungsgemässen Reinigungsanlage die Tragstruktur eine Gitterstruktur aufweisen. Damit kann die Steifigkeit der Tragstruktur erhöht werden.

Darüber hinaus kann bei der erfindungsgemässen Reinigungsanlage die Transporteinrichtung Saugnäpfe aufweisen. Diese sind insbesondere dann von Vorteil, wenn die Reinigungsanlage an einem Gebäude mit einer glatten Fassade, wie beispielsweise einer Glasfassade, eingesetzt werden soll.

Alternativ oder zusätzlich dazu kann bei der erfindungsgemässen Reinigungsanlage die Transporteinrichtung einen Raupenantrieb oder ein Schreitwerk aufweisen.

Bei einer Weiterbildung der erfindungsgemässen Reinigungsanlage weist die Versorgungseinrichtung einen Vorratsbehälter auf, der für das Reinigungsmittel verwendbar ist.

Bei einer anderen Weiterbildung der erfindungsgemässen Reinigungsanlage weist die Versorgungseinrichtung eine Winde auf, um den Vorratsbehälter abseilen zu können. Zudem ist am Vorratsbehälter einen Propeller vorgesehen. Mit dem Propeller wird die Position des Vorratsbehälters und gegebenenfalls auch die Position des oberen Teils der Versorgungseinrichtung stabilisiert. Mit Hilfe des Propellers am Vorratsbehälter können die Windkräfte auf den Vorratsbehälter wirkenden Windkräfte kompensiert werden.

Bei einer Ausführungsform der erfindungsgemässen Reinigungsanlage weist die Reinigungseinrichtung eine Bürste auf. Damit kann die Fassade mit Reinigungsmittel und zusätzlich mechanisch gereinigt werden.

Bei einer weiteren Ausführungsform der erfindungsgemässen Reinigungsanlage weist die Reinigungseinrichtung eine Düsen auf. Dies ist insbesondere bei einer Fassade von Vorteil, die bei einer mechanischen Reibung leicht verkratzt.

Zudem kann bei der erfindungsgemässen Reinigungsanlage die Reinigungseinrichtung mit Trockeneis arbeiten. Dies ist insbesondere bei einer Fassade von Vorteil, die bei einer mechanische Reibung leicht verkratzt. Die Kombination aus Düse und Trockeneis ermöglicht eine besonders schonende Reinigung der Fassade.

Bei einer Weiterbildung der erfindungsgemässen Reinigungsanlage ist ein Sicherungsseil vorgesehen, das das Luftschiff mit dem Gebäude verbindet. Auf diese Weise sind das Luftschiff und damit auch die mit dem Luftschiff verbundene Versorgungseinrichtung und die Reinigungseinrichtung am Gebäude gegen einen Absturz gesichert. Die Sicherheit kann damit weiter erhöht werden.

Ferner wird ein Gebäude vorgeschlagen, das die erfindungsgemässe Reinigungsanlage und einen Hangar für das Luftschiff umfasst. Die Platzierung des Hangars im oberen Bereich des Hochhauses hat den Vorteil, dass das Luftschiff bereits aus einer erhöhten Position heraus starten kann und damit schneller den Arbeitsort erreicht.

Schliesslich kann die erfindungsgemässe Reinigungsanlage zum Reinigen der Fassade eines Gebäudes verwendet werden.

### Kurze Beschreibung der Zeichnungen

Im Folgenden wird die Erfindung mit mehreren Ausführungsbeispielen anhand von 18 Figuren weiter erläutert.
- Figur 1: zeigt eine erste mögliche Ausführungsform der erfindungsgemässen Reinigungsanlage für eine Fassade eines Gebäudes zusammen mit dem Gebäudekomplex in der Seitenansicht.
- Figur 2: zeigt die auf der Tragstruktur der Reinigungsanlage montierte Reinigungseinrichtung in der Seitenansicht.
- Figur 3: zeigt die an der Tragstruktur der Reinigungsanlage montierte Versorgungseinrichtung und Transporteinrichtung in der Seitenansicht.
- Figur 4: zeigt die erste Ausführungsform der erfindungsgemässen Reinigungsanlage zusammen mit dem Gebäudekomplex in der Seitenansicht, wobei der Vorratsbehälter der Versorgungseinrichtung gerade herabgelassen ist.
- Figur 5: zeigt die erste Ausführungsform der erfindungsgemässen Reinigungsanlage in der Draufsicht.
- Figur 6: zeigt die auf der Tragstruktur der Reinigungsanlage montierte Reinigungseinrichtung in der Draufsicht.
- Figur 7: zeigt die auf der Tragstruktur der Reinigungsanlage montierte Transportseinrichtung in der Draufsicht.
- Figur 8: zeigt den Gebäudekomplex in der Seitenansicht und den Ort, an dem eine zweite mögliche Ausführungsform der erfindungsgemässen Reinigungsanlage untergebracht ist.
- Figur 9: zeigt in einer vergrösserten Darstellung den Ort, an dem die zweite mögliche Ausführungsform der erfindungsgemässen Reinigungsanlage untergebracht ist zusammen mit der zweite Ausführungsform der erfindungsgemässen Reinigungsanlage.
- Figur 10: zeigt in einer vergrösserten Darstellung den Teleskoparm, mit dem das Luftschiff am Gebäude andockt.
- Figur 11: zeigt den Gebäudekomplex zusammen mit dem Luftschiff während es aus dem Hangar schwebt.
- Figur 12: zeigt in einer vergrösserten Darstellung das Luftschiff zusammen mit dem Teleskoparm beim Ablegen.
- Figur 13: zeigt den Gebäudekomplex zusammen mit Luftschiff während es in der Arbeitsposition schwebt.
- Figur 14: zeigt den Gebäudekomplex zusammen mit Luftschiff und der Reinigungseinrichtung und der Versorgungseinrichtung während des Reinigens der Gebäudefassade.
- Figur 15: zeigt die Versorgungsstation und die Reinigungseinrichtung in einer vergrösserten Darstellung.
- Figur 16: zeigt den Gebäudekomplex zusammen mit Luftschiff und der Reinigungseinrichtung, wobei der Vorratsbehälter herab gelassen ist.
- Figur 17: zeigt in einer vergrösserten Darstellung den herabgelassenen Versorgungsbehälter.
- Figur 18: zeigt in einer vergrösserten Darstellung den oberen Teil der Versorgungseinrichtung.

### Wege zur Ausführung der Erfindung

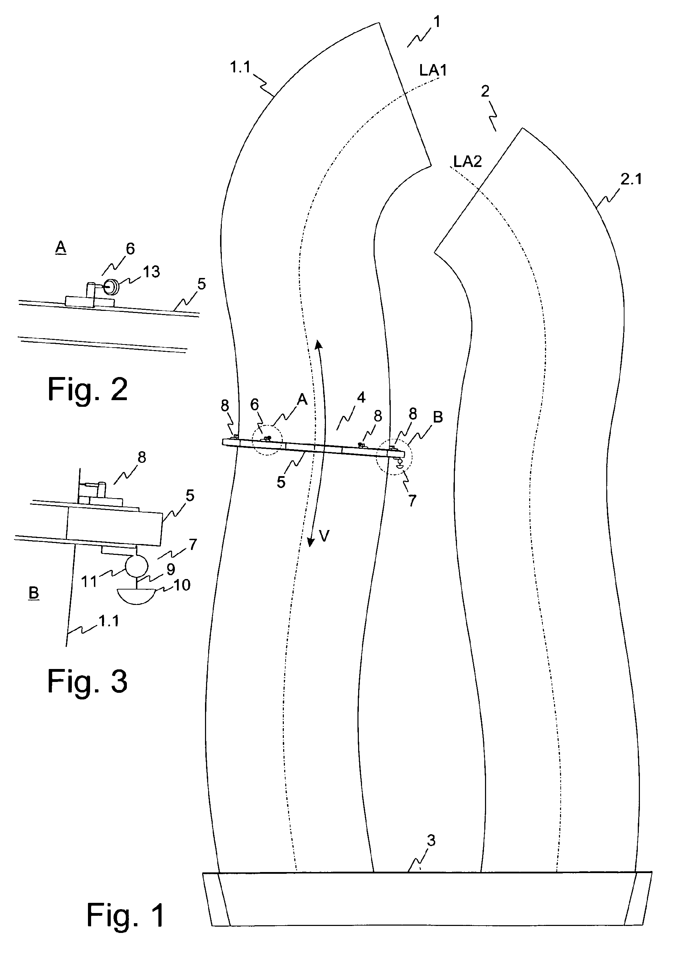

Im Folgenden wird die erste Ausführungsform der erfindungsgemässen Reinigungsanlage anhand der Figuren 1 bis 7 erläutert.

In Figur 1 ist ein Gebäudekomplex zusammen mit der ersten Ausführungsform der erfindungsgemässen Reinigungsanlage 4 dargestellt. Der Gebäudekomplex umfasst ein erstes Hochhaus 1, ein zweites Hochhaus 2 und ein Verbindungsgebäude 3, das in Bezug auf die beiden Hochhäuser 1 und 2 niedrig ist und die beiden Hochhäuser 1 und 2 miteinander verbindet. In Figur 1 befindet sich die Reinigungsanlage 4 etwa auf der halben Höhe des ersten Hochhauses 1, um dort dessen Fassade 1.1 zu reinigen. Im Folgenden wird das erste Hochhaus 1 auch als Gebäude 1 und das zweite Hochhaus 2 auch als Gebäude 2 bezeichnet.

Die in Figur 1 gezeigte Ausführungsform der Reinigungsanlage 4 umfasst eine ringförmige Tragstruktur 5, eine Reinigungseinrichtung 6, eine Versorgungseinrichtung 7 und mehrere Transporteinrichtungen 8.

Die Tragstruktur 5 trägt die Reinigungseinrichtung 6. Der Kreisausschnitt A in Figur 1 umfasst die Tragstruktur 5 und die Reinigungseinrichtung 6 und ist in Figur 2 in einer vergrösserten Ansicht gezeigt.

Zudem trägt die Tragstruktur 5 auch die Versorgungseinrichtung 7 und die Transporteinrichtungen 8. Der Kreisausschnitt B in Figur 1 umfasst die Versorgungseinrichtung 7 und eine der Transporteinrichtungen 8 und ist in Figur 3 in einer vergrösserten Ansicht gezeigt. Die Versorgungseinrichtung 7 ist auf der Unterseite der Tragstruktur 5 montiert und umfasst eine Winde 11, ein Tragseil 9 und einen Vorratsbehälter 10. Mit Hilfe der Winde 11 kann der Vorratsbehälter 10, der am Tragseil 9 hängt, bis auf das Dach des Verbindungsgebäudes 3 herab gelassen werden. Im Vorratsbehälter 10 wird Reinigungsmittel, wie beispielsweise Wasser oder Trockeneis aufbewahrt. Der Vorratsbehälter 10 der Versorgungseinrichtung 7 ist über eine Schlauchleitung mit der Reinigungseinrichtung 6 verbunden und versorgt diese mit Reinigungsmittel. Auf der Tragstruktur 5 können auch mehrere Reinigungseinrichtungen 6 montiert sein, die dann über entsprechende Schlauchleitungen von der Versorgungseinrichtung 7 mit Reinigungsmittel und Energie versorgt werden. Die Versorgungseinrichtung 7 kann auch einen Unterdruckerzeuger umfassen, der über entsprechende Leitungen mit den Transporteinrichtungen 8 verbunden ist. Der Unterdruckerzeuger wird verwendet, um an den Saugnäpfen der Transporteinrichtungen 8 den erforderlichen Unterdruck zu erzeugen, damit sich die Saugnäpfe an der Fassade 1.1 festsaugen können.

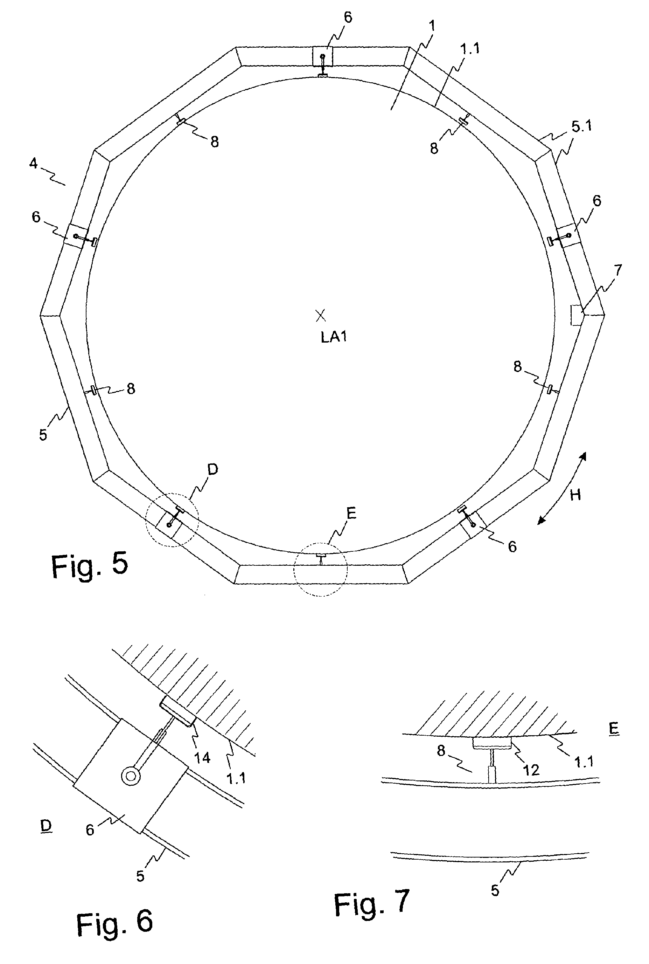

Satt der Saugnäpfe oder zusätzlich zu den Saugnäpfen kann die Transporteinrichtung 8 auch ein Fahrwerk aufweisen, wie es in der Offenlegungsschrift DE 102 03 326 A1 beispielsweise in den Figuren 1 bis 4 gezeigt und in der Beschreibung in den Absätzen 30 bis 37 beschrieben ist. Alternativ dazu kann die Transporteinrichtung 8 auch ein Fahrwerk aufweisen, das so ausgebildet ist, wie es in der Druckschrift EP 1 507 696 B1 beschrieben ist. Figur 7 zeigt die auf der Tragstruktur 5 der Reinigungsanlage 4 montierte Transportseinrichtung 8 in der Draufsicht.

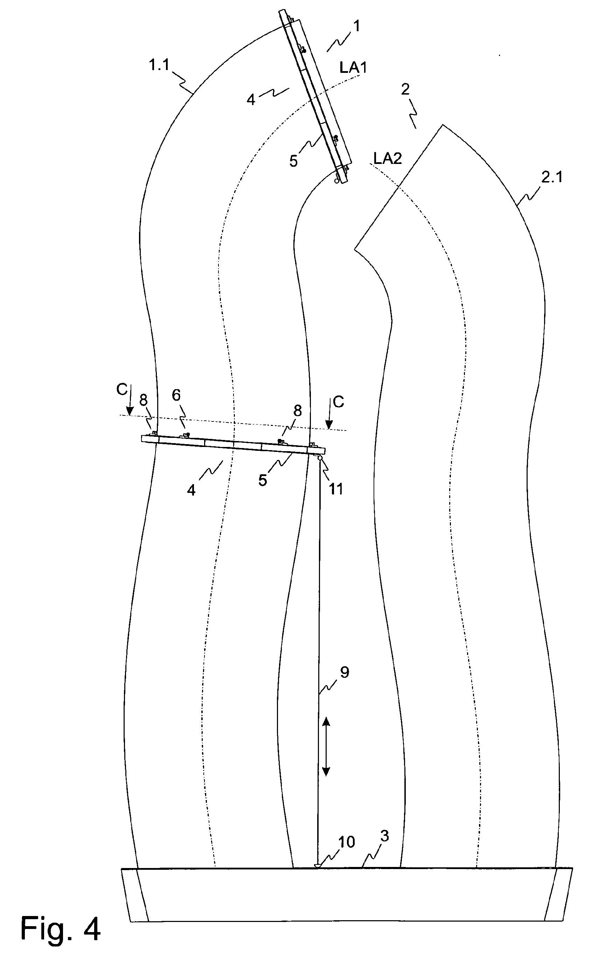

Figur 5 zeigt die Reinigungsanlage 4 zusammen mit dem Hochhaus 1 in der Draufsicht (Figur 4, Ansicht C), wobei das Hochhaus 1 im Querschnitt dargestellt ist. Die Tragstruktur 5 umschliesst das Gebäude 1 und zwar in der Regel so, dass der Abstand zwischen der Tragstruktur 5 und der Fassade 1.1 des Gebäudes 1 in dem Bereich, in dem die Fassade zu reinigen ist, annähernd konstant ist.

Figur 6 zeigt die auf der Tragstruktur 5 der Reinigungsanlage 4 montierte Reinigungseinrichtung 6 in der Draufsicht.

Die erfindungsgemässe Reinigungsanlage 4 kann auch demontiert werden, indem die Tragstruktur 5 zerlegt wird. Anschliessend kann die Reinigungsanlage 4 an einem anderen Gebäude, beispielsweise dem Hochhaus 2 wieder aufgebaut und dort in Betrieb genommen werden.

Vorteilhafter Weise umfasst die Tragstruktur 5 mehrere Segmente 5.1 und ist so ausgebildet, dass sie um ein oder mehrere Segmente 5.1 ergänzt werden kann, oder dass das eine oder andere Segment 5.1 ausgetauscht werden kann.

Das in den Figuren gezeigte Gebäude 1 ist lediglich ein Beispiel, an dem der Aufbau und die Funktionsweise der Reinigungsanlage 4 beschrieben wird. Das Gebäude kann selbstverständlich auch einen anders geformten Querschnitt, wie beispielsweise einen quadratischen, rechteckigen, vieleckigen oder ovalen Querschnitt aufweisen. Durch den segmentartigen Aufbau der Tragstruktur 5 kann diese ohne weiteres an unterschiedliche Gebäudegeometrien angepasst werden.

Zu Beginn des Reinigungsvorgangs befindet sich die Reinigungsanlage 4 auf dem untersten Stockwerk des Hochhauses 1, das heisst auf dem Dach des Verbindungsgebäudes 3. Während des Betriebs wird die Reinigungsanlage 4 dann entlang der Längsachse LA1 mit Hilfe der Transporteinrichtungen 8 nach oben bewegt. Dabei ist die Reinigungseinrichtung 6 beziehungsweise sind die Reinigungseinrichtungen 6 in Betrieb und reinigen die Fassade 1.1 des Hochhauses.

Falls die Reinigungseinrichtungen 6 ortsfest auf der Tragstruktur 5 montiert sind, dreht sich die Reinigungsanlage 4 zusätzlich um die Längsachse LA1 des Hochhauses 1. Der Doppelpfeil H in Figur 5 soll diese Drehbewegung veranschaulichen.

Falls die Reinigungseinrichtungen 6 auf der Tragstruktur 5 beweglich angeordnet sind, bewegen sie sich in der horizontalen Ebene hin und her und reinigen so abschnittsweise in horizontalen Bahnen die Fassade 1.1. Statt dessen sind aber auch andere Bewegungsmuster möglich.

Sobald ein horizontaler Abschnitt der Fassade 1.1 gereinigt ist, wird die Reinigungsanlage 4 mit den Transporteinrichtungen 8 ein Stück weiter nach oben transportiert. Der Pfeil V in Figur 1 soll dies veranschaulichen.

Da Hochhäuser des Öfteren einige hundert Meter hoch sind, wird der Vorrat an Reinigungsmittel in der Regel nicht ausreichen, um die Fassade 1.1 des Hochhauses in einem Arbeitsgang komplett zu reinigen. Daher umfasst die Versorgungseinrichtung 7 den abseilbaren Vorratsbehälter 10, der im Bedarfsfall bis auf den Boden beziehungsweise bis auf das Dach des Verbindungsgebäudes 3 herab gelassen werden kann. Diese Situation ist in Figur 4 dargestellt. Der Vorratsbehälter wird auf dem Dach des Verbindungsgebäudes 3 mit dem entsprechenden Reinigungsmittel, wie beispielsweise Wasser oder Trockeneis befüllt und dann mit der Winde 11 wieder zur Reinigungsanlage 4 hoch gezogen. Anschliessend wird die Reinigung der Fassade 1.1 fortgesetzt. Wenn die Reinigungsanlage das oberste Stockwerk des Hochhauses erreicht und dort die Fassade gereinigt hat, wird sie mit Hilfe der Transporteinrichtungen 8 wieder entlang der Längsachse LA1 nach unten bewegt bis sie schliesslich wieder unten angekommen ist.

Die erfindungsgemässe Reinigungsanlage 4 hat den Vorteil, dass sie selbsttätig auch an einem überhängenden Teil des Hochhauses 1 (siehe in Figur 1 den oberen Abschnitt des Hochhauses) sicher bewegen kann. Die Reinigungsanlage 4 ist in der Lage sich um die eigene Längsachse zu drehen und sich sowohl vertikal als auch schräg oder gar horizontal vorwärts bewegen zu können.

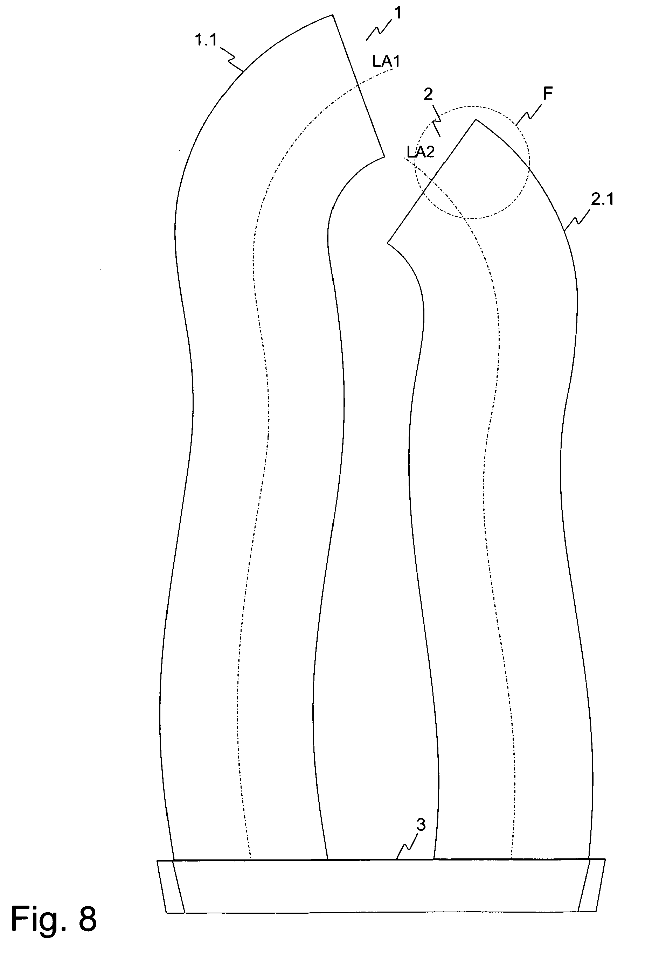

Im Folgenden wird die zweite Ausführungsform der erfindungsgemässen Reinigungsanlage anhand der Figuren 8 bis 18 weiter erläutert.

Figur 8 zeigt den Gebäudekomplex in der Seitenansicht und den Ort, an dem die zweite Ausführungsform der erfindungsgemässen Reinigungsanlage untergebracht ist. Der Kreis F kennzeichnet den Ort an dem die Reinigungsanlage geparkt ist, das heisst wenn sie also nicht in Betrieb ist.

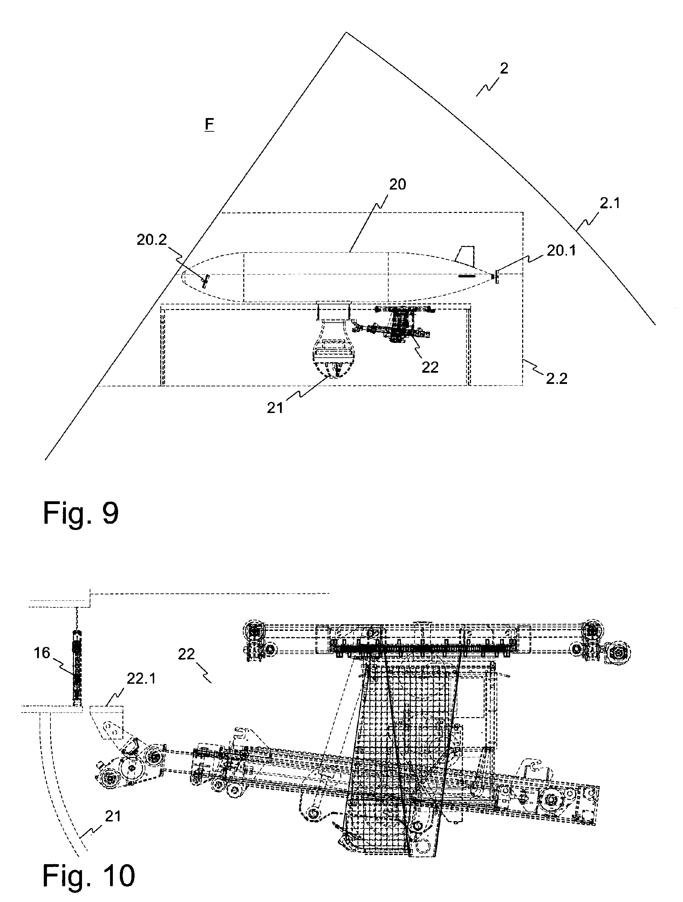

Der Bereich innerhalb des Kreises F ist in Figur 9 in vergrössert dargestellt. In einem Hangar 2.2, der sich im obersten Bereich des Hochhauses 2 befindet ist ein Luftschiff 20 geparkt. Das Luftschiff 20 weist im vorderen Bereich einen drehbaren Antrieb 20.2 und im hinteren Bereich einen weiteren Antrieb 20.1 auf. An der Unterseite Des Luftschiffes 20 befindet sich eine Versorgungseinrichtung 21, die im Wesentlichen die gleichen Aufgaben wie die Versorgungseinrichtung 7 bei der ersten Ausführungsform der erfindungsgemässen Reinigungsanlage 4 erfüllt. Im Hangar 2.2 befindet sich zudem ein Teleskoparm 22 mit dem das Luftschiff 20 aus dem Hangar 2.2 heraus manövriert und in den Hangar herein gezogen werden kann.

Figur 10 zeigt in einer vergrösserten Darstellung den Teleskoparm 22, mit dem das Luftschiff am Gebäude andockt. Um das Luftschiff 20 am Teleskoparm 22 andocken zu können, weist dieser eine Andockvorrichtung 22.1 auf.

Im Folgenden wird unter dem Begriff Luftschiff ein lenkbares Luftfahrzeug verstanden, dessen Auftrieb auf aerostatischen Kräften beruht und das über einen eigenen Antrieb verfügt.

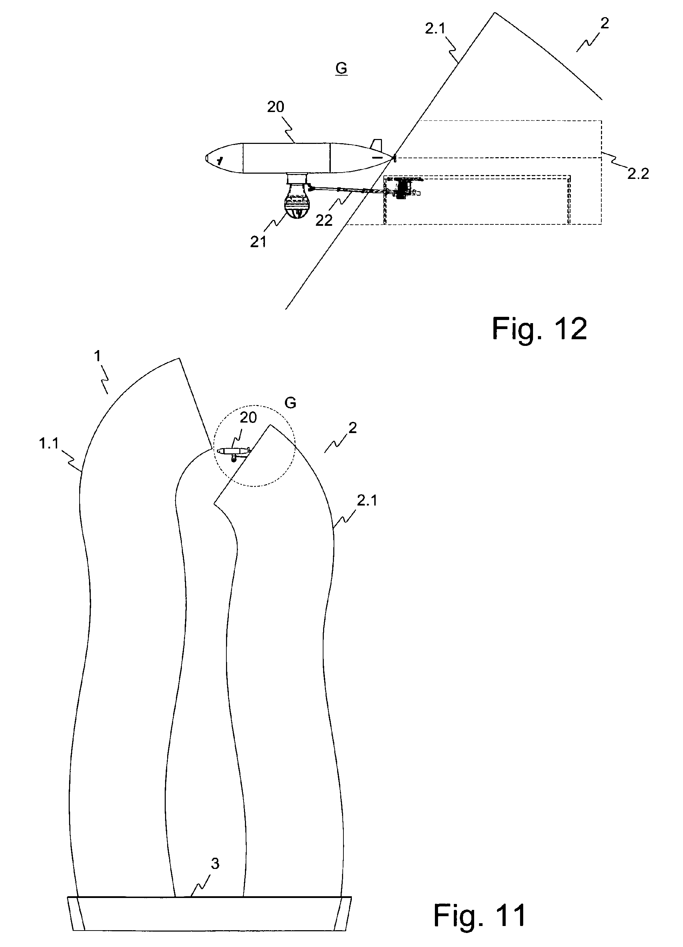

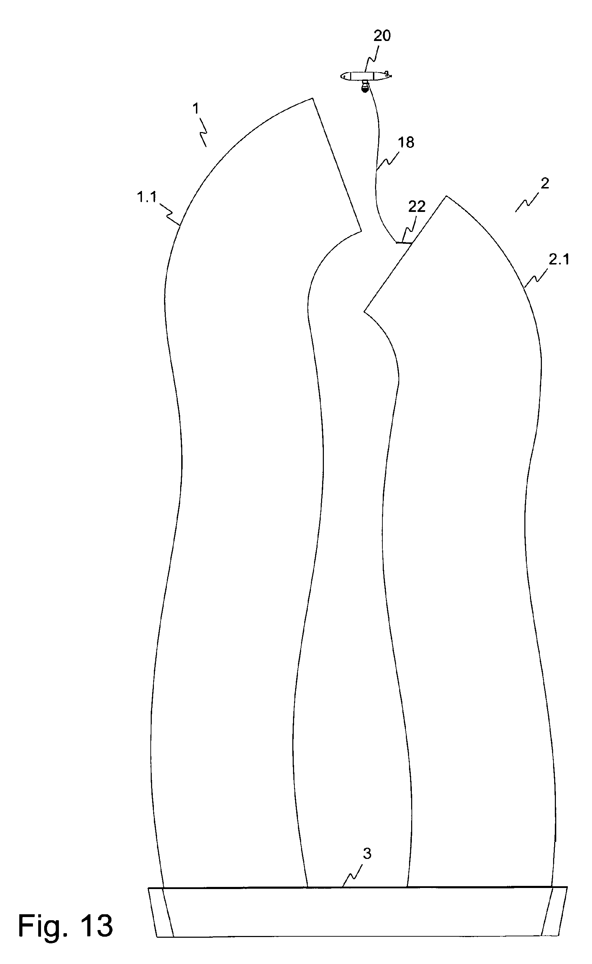

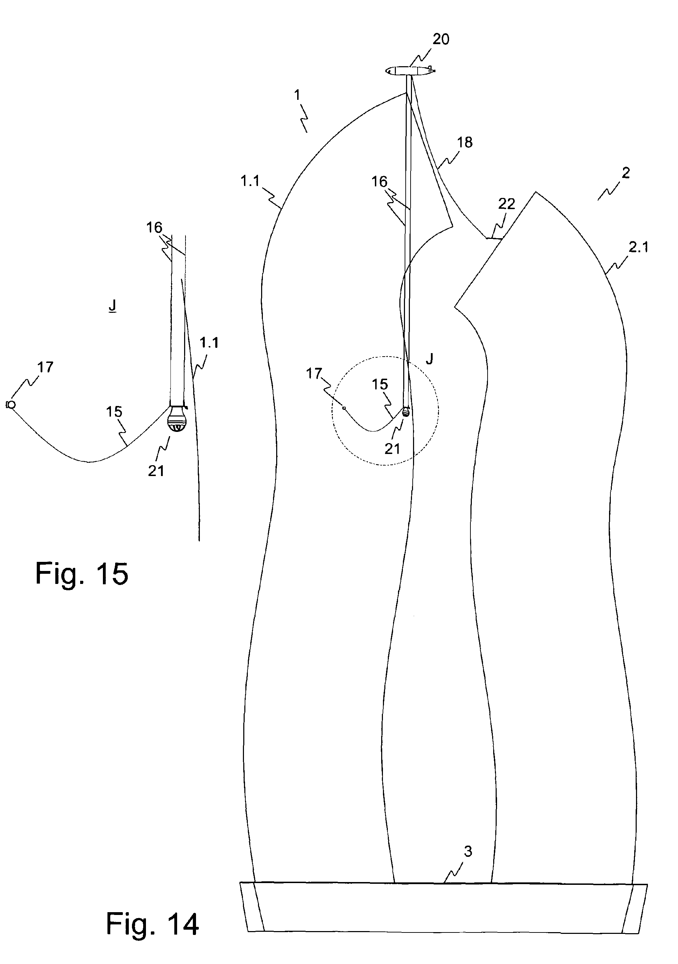

Um die Reinigungsanlage in die Betriebsstellung zu bringen wird, wie in den Figur 11 und 12 gezeigt, das Luftschiff 20 mit Hilfe des Teleskoparms 22 aus dem Hangar 2.2 geschoben. Der in Figur 11 gezeigte kreisförmige Ausschnitt G ist in Figur 12 vergrössert dargestellt. Nachdem das Luftschiff 20 ausreichend weit aus dem Hangar 2.2 manövriert wurde schwebt es nach oben und erreicht schliesslich, wie in Figur 13 gezeigt seine Arbeitsposition. Das Luftschiff 20 ist dabei über ein Sicherungsseil 18 mit dem Teleskoparm 22 verbunden. Nun wird die Versorgungseinrichtung 21, die die Reinigungseinrichtung 17 beherbergt, an zwei Seilen 16, die mit dem Luftschiff 20 verbunden sind, in die gewünschte Arbeitsposition gebracht. In einem weiteren Schritt wird dann die Reinigungseinrichtung 17, aus der Versorgungseinrichtung 21 heraustransportiert und saugt sich dann selbständig mit Hilfe von Saugnäpfen an der Fassade 1.1 des Hochhauses 1 an. Figur 14 zeigt den Gebäudekomplex, das Luftschiff 20, die Versorgungseinrichtung 21 und die Reinigungseinrichtung 17 während des Reinigens der Gebäudefassade 1.1. Der kreisförmige Ausschnitt J ist in Figur 15 vergrössert dargestellt. Die Reinigungseinrichtung 17 ist über eine Versorgungsleitung 15 mit der Versorgungseinrichtung 21, welche auch als Versorgungsstation bezeichnet wird, verbunden und bezieht über die Versorgungsleitung 15 Reinigungsmittel und Energie. Die Versorgungsleitung 15 beinhaltet auch eine Unterdruckleitung, damit die Reinigungseinrichtung 17 sich mit den Säugnäpfen an der Fassade festsaugen kann. Darüber hinaus ist die Versorgungsleitung 15 auch so ausgebildet, dass sie als Sicherheitsseil dient und so verhindert, dass die Reinigungseinrichtung 17 im Notfall abstürzt. Die die Reinigungseinrichtung 17 kann sich während des Betriebs autonom auf der Fassade 1.1 bewegen und diese nach einem vorgegebenen Muster reinigen. Damit sich die Reinigungseinrichtung 17 bewegen kann, weist sie ein Fahrwerk auf, das wie in der Druckschrift EP 1 507 696 B1 angegeben ist, ausgebildet sein kann. Das Fahrwerk der die Reinigungseinrichtung 17 umfasst mehrere Sauger, die in der Fahrebene auf einer Endlosreihe umlaufen und deren Saugseite zur Fahrfläche weisen. Ein aktivierter Sauger sitzt auf der Fahrebene auf wohingegen ein nicht aktivierter Sauger in einem definierten Abstand zur Fahrebene umläuft.

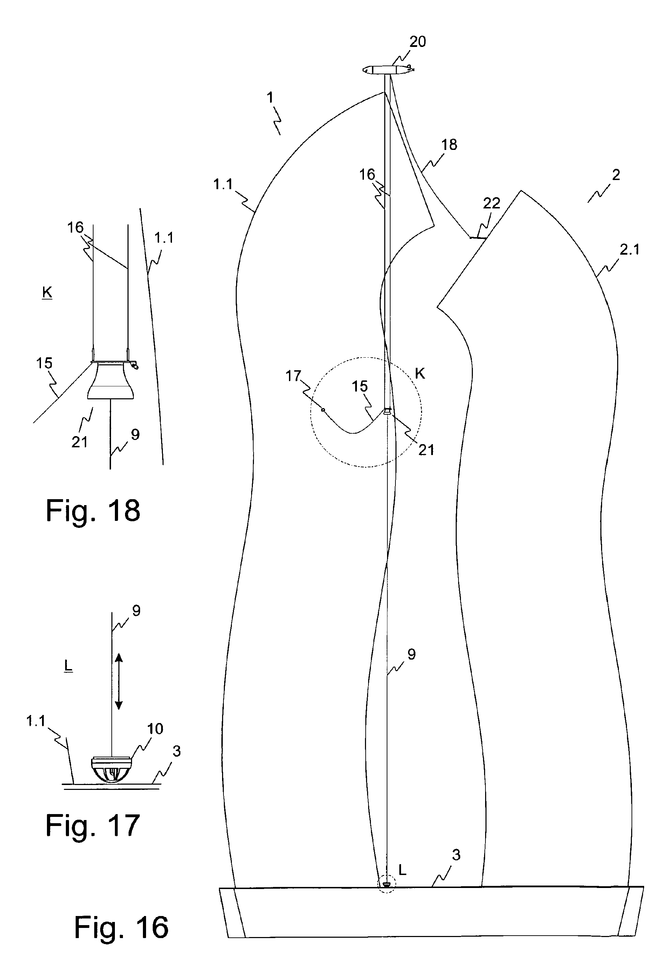

Wie bereits bei der ersten Ausführungsform der Reinigungsanlage beschrieben sind Hochhäuser des Öfteren einige hundert Meter hoch, so dass der Vorrat an Reinigungsmittel in der Regel nicht ausreicht, um die Fassade 1.1 des Hochhauses in einem Arbeitsgang komplett zu reinigen. Daher umfasst die Versorgungseinrichtung 21 den abseilbaren Vorratsbehälter 10, der im Bedarfsfall bis auf den Boden beziehungsweise bis auf das Dach des Verbindungsgebäudes 3 herab gelassen werden kann. Diese Situation ist in Figur 16 dargestellt. Der kreisförmige Ausschnitt L ist in Figur 17 vergrössert dargestellt. Der kreisförmige Ausschnitt K aus Figur 16 ist in Figur 18 vergrössert dargestellt.

Das Verfahren zum Reinigen einer Fassade mit Trockeneis ist aus der Druckschrift DE 102 33 304 B4 zu entnehmen und kann dort bei Bedarf nachgelesen werden. Es wird deshalb an dieser Stelle auf diese Druckschrift verwiesen.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So sind beispielsweise die in den Figuren 1 bis 7 und 8 bis 18 erläuterten Ausführungsbeispielen auch miteinander kombinierbar und sind auch für anders als in den Figuren 1 bis 18 gezeigten Hochhäusern verwendbar. So kann das Hochhaus im Querschnitt auch oval oder eckig sein. Die Tragstruktur 5 wird dann an den jeweiligen Querschnitt des Gebäudes so angepasst, dass es das Gebäude mit einem annähernd konstanten Abstand umschliesst.

### Bezugszeichenliste

- 1: erstes Hochhaus
- 1.1: Fassade
- 2: zweites Hochhaus
- 2.1: Fassade
- 2.2: Hangar
- 3: Verbindungsgebäude
- 4: Reinigungsanlage
- 5: Tragstruktur
- 5.1: Segmente
- 6: Reinigungseinrichtung
- 7: Versorgungseinrichtung
- 8: Transporteinrichtung
- 9: Seil
- 10: Vorratsbehälter
- 11: Winde
- 12: Saugnapf
- 13: Bürste
- 14: Düsen
- 15: Versorgungsleitung
- 16: Tragseile
- 17: Reinigungseinrichtung
- 18: Sicherungsseil
- 20: Luftschiff
- 20.1: Antrieb
- 20.2: Antrieb
- 21: Versorgungseinrichtung
- 22: Teleskoparm
- A, B: Ausschnitte
- C: Ansicht
- D - G: Ausschnitte
- J, K,: L Ausschnitte
- H: horizontale Bewegungsrichtung
- V: vertikale Bewegungsrichtung
- LA1: Längsachse des ersten Hochhauses
- LA2: Längsachse des zweiten Hochhauses

## Patentansprüche

1. Reinigungsanlage für eine Fassade eines Gebäudes,
- mit einer ringförmigen Tragstruktur (5), welche derart ausgebildet ist, dass sie das Gebäude (1) umschliessen kann,
- mit einer Transporteinrichtung (8), welche an der Tragstruktur (5) befestigt und vorgesehen ist, um die Tragstruktur (5) zu bewegen, und
- mit einer Reinigungseinrichtung (6), welche mit der Tragstruktur (5) verbunden und vorgesehen ist, um die Fassade (1.1) des Gebäudes (1) zu reinigen.

2. Reinigungsanlage nach Patentanspruch 1,
mit einer Versorgungseinrichtung (7), welche mit der Tragstruktur (5) verbunden und vorgesehen ist, um die Reinigungseinrichtung (6) und die Transporteinrichtung (8) mit Energie und Reinigungsmittel zu versorgen.

3. Reinigungsanlage nach einem der Patentansprüche 1 oder 2,
bei der die Tragstruktur (5) aus Leichbaumaterial hergestellt ist.

4. Reinigungsanlage nach einem der Patentansprüche 1 bis 3,
bei der die Tragstruktur (5) eine Gitterstruktur aufweist.

5. Reinigungsanlage nach einem der Patentansprüche 1 bis 4,
bei der die Transporteinrichtung (8) Saugnäpfe aufweist.

6. Reinigungsanlage nach einem der Patentansprüche 1 bis 5,
bei der die Transporteinrichtung (8) einen Raupenantrieb oder ein Schreitwerk aufweist.

7. Reinigungsanlage für eine Fassade eines Gebäudes,
- mit einem Luftschiff (20),
- mit einer Reinigungseinrichtung (17), welche vorgesehen ist, um die Fassade (1.1) des Gebäudes (1) zu reinigen, und
- mit einer Versorgungseinrichtung (21), welche mit dem Luftschiff (20) und der Reinigungseinrichtung (17) verbunden und vorgesehen ist, um die Reinigungseinrichtung (17) mit Energie und Reinigungsmittel zu versogen.

8. Reinigungsanlage nach einem der Patentansprüche 2 bis 7,
bei der die Versorgungseinrichtung (7; 21) einen Vorratsbehälter (10) aufweist.

9. Reinigungsanlage nach Patentanspruch 8,
- bei der die Versorgungseinrichtung (7; 21) eine Winde (11) aufweist, um den Vorratsbehälter (10) abseilen zu können, und
- bei der der Vorratsbehälter (10) einen Propeller aufweist.

10. Reinigungsanlage nach einem der Patentansprüche 1 bis 9,
bei der die Reinigungseinrichtung (6) eine Bürste (13) aufweist.

11. Reinigungsanlage nach einem der Patentansprüche 1 bis 10,
bei der die Reinigungseinrichtung (6) eine Düsen (14) aufweist.

12. Reinigungsanlage nach einem der Patentansprüche 1 bis 11,
bei der die Reinigungseinrichtung (6) mit Trockeneis arbeitet.

13. Reinigungsanlage nach einem der Patentansprüche 1 bis 12,
mit einem Sicherungsseil (18), das das Luftschiff (20) mit dem Gebäude (2) verbindet.

14. Gebäude mit einer Reinigungsanlage nach einem der Patentansprüche 7 bis 13,
mit einem Hangar (2.2) für das Luftschiff (20).

15. Verwendung der Reinigungsanlage nach einem der Patentansprüche 1 bis 14,
zum Reinigen der Fassade (1.1) eines Gebäudes (1).
